# EUROPEAN PATENT SPECIFICATION

(11) **EP 3 481 586 B1**
(45) Date of publication and mention of the grant of the patent: **28.06.2023**
(21) Application number: 17742611.1
(22) Date of filing: 11.07.2017
(51) Int. Cl.: B23K 26/14, H05H 1/34

(54) **DOUBLE NOZZLE FOR A LASER CUTTING HEAD**
DOPPELDÜSE FÜR LASERSCHNEIDKOPF
BUSE DOUBLE POUR TÊTE DE COUPAGE LASER

(30) Priority: 11.07.2016 US 201662360908 P; 31.10.2016 US 201615339077
(43) Date of publication of application: 15.05.2019
(73) Proprietor: Hypertherm, Inc., Hanover, NH 03755 (US)
(72) Inventor: CIAMBRA, Joe, Hanover, NH 03755 (US); GARG, Sanjay, Hanover, NH 03755 (US); WOODS, Kenneth J., Hanover, NH 03755 (US); COOK, David J., Hanover, NH 03755 (US); ORLANDI, Davide, Hanover, NH 03755 (US)
(74) Representative: Barker Brettell LLP
(86) International application number: PCT/US2017/041582
(87) International publication number: WO 2018/013600

(56) References cited:
- DE-A1- 3 637 568
- JP-A- H1 190 672
- US-A- 5 477 026

## Description

The invention relates generally to the field of laser cutting systems and processes. More specifically, the invention relates to a double nozzle for laser cutting head, for improving alignment of a laser beam and fluid flow within this double nozzle.

### BACKGROUND

Material processing apparatuses, such as laser cutting machines, are widely used in the cutting, welding, and heat treating of materials. A laser-cutting machine generally includes a high-power laser, a nozzle, a gas stream, an optical system, and a computer numeric control (CNC) system. The laser beam and gas stream pass through an orifice of the nozzle and impinge upon a workpiece. The laser beam heats the workpiece, which, in conjunction with any chemical reaction between the gas and workpiece material, alters (e.g., liquefies and/or vaporizes) a selected area of workpiece, allowing an operator to cut or otherwise modify the workpiece. The laser optics and CNC are used to position and direct the laser beam relative to the workpiece during a cutting operation. Lasers are frequently used in material processing applications because laser beams can be focused to small spot sizes, thereby achieving the intensity and power density desired to process industrial-strength materials, such as metals.

In conventional laser cutting systems, alignment of system components (e.g., nozzles) can be critical to system life and performance. For example, alignment of the nozzle bore and/or orifice to the nozzle holder and laser cutting head optics can be critical to proper functioning of the laser cutting process. In addition, alignment of the laser beam and the gas jet can be critical to achieving uniform cut quality around all sides of the workpiece. One instance in which alignment issues manifest is during component replacement and installation, during which the nozzle bore(s) and/or orifice(s) must be aligned with a longitudinal axis of the laser head, and thus the laser beam, so as to avoid non-symmetric gas flow about the beam. The problem is compounded because conventional nozzles must be replaced frequently, and each nozzle replacement can involve a complex installation and verification to prove alignment. In addition, because components must often be replaced in the field, significant machine down time and technician expertise can be required to ensure proper installation and alignment. Field replacement can also require specialized tools to attain, verify, and maintain proper component alignment.

One type of nozzle, a "double nozzle," has specific benefits for laser cutting applications but also creates unique issues around alignment of component parts. Structurally, a double nozzle typically has two pieces (e.g., an inner and an outer nozzle portion) that are press-fitted or threaded together. A primary function of a double nozzle is to create two separate flows of gas within an inner and an outer nozzle portion. One flow of gas is delivered through a central bore and positioned along the axis of the laser beam itself, while a second flow of gas surrounds the central bore and provides a coaxial flow of lower pressure gas. The central flow helps to remove material during the cutting process as the laser beam heats the material and the process gas ejects the material from the kerf, while the lower pressure coaxial flow provides a protective flow around the central flow, preventing entrainment of air into the molten kerf and surrounding the kerf with the correct gas chemistry for the material being processed.

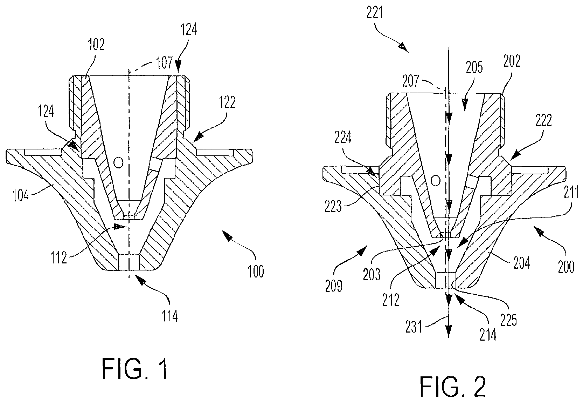

Figure 1 shows a prior art double nozzle configuration. In this embodiment, a double nozzle 100 includes an inner body portion 102 (e.g., inner nozzle portion or inner nozzle) and an outer body portion 104 (e.g., outer nozzle portion or outer nozzle) joined at an interface surface 124. The inner body portion 102 has an orifice 112 that permits the laser beam to pass through the double nozzle 100. The outer body portion 104 has an orifice 114 and an alignment surface 122 for aligning the double nozzle 100 with a laser machining head (not shown). In this configuration, two separate surface interfaces determine alignment of the inner nozzle orifice 112 relative to a longitudinal axis 107 of the laser machining head and thus the laser beam itself: (1) the alignment surface 122 with the laser machining head; and (2) the nozzle interface 124 between the inner body portion 102 and the outer body portion 104.

The inner nozzle orifice 112 of inner body portion 102 in Figure 1 is smaller than the outer nozzle orifice 114 and is located closer to the laser beam during operation than the outer nozzle orifice 114. Thus, alignment of the inner nozzle orifice 112 can be particularly important to performance and life of the double nozzle 100. The alignment of the inner nozzle orifice 112 with the longitudinal axis 107 of the laser machining head, and thus the laser beam via two separate interfaces, depends on the accuracy and precision of four separate surfaces that create each of these two-surface interfaces. Therefore, a high level of manufacturing precision is required on these four surfaces, as well as installation accuracy and verification to ensure proper life and performance; misalignment in any of these components can have a dramatic impact on alignment of the inner nozzle orifice 112 relative to longitudinal axis 107 of the laser beam. What is needed is a double nozzle configuration that reduces the number of opportunities for misalignment, thereby improving alignment of the laser beam and the nozzle bore and/or orifice, and simplifies installation and operation.

Further DE 36 37 568 A1 describes, according to its abstract, that a laser beam of the laser machine tool, after passing through a nozzle in a focused manner, strikes the workpiece to be machined, in which it burns a hole for example. A gas can come out with the laser beam via the nozzle orifice. The gas can be used at least partly for cooling purposes. Intensified cooling of the instantaneous burning point is obtained if additional fluid is supplied outside the nozzle. The additional fluid should strike the instantaneous burning point as accurately as possible. This is best achieved if the tapering, in particular conical or frustoconical, nozzle is surrounded by a sleeve and the fluid is allowed to flow between nozzle and sleeve. The direction of flow is thereby exactly predetermined. It is advantageous if only individual fluid jets come out which cross approximately in the area of the instantaneous burning point. This is achieved in a simple manner by longitudinal grooves being made in the outer circumference of the nozzle and/or in the inner circumference of the sleeve. The longitudinal grooves are then covered by the respective other part to form longitudinal passages. Increased demand for fluid is satisfied by lifting the sleeve slightly from the nozzle towards the workpiece, a screwing motion being given preference to a longitudinal displacement for sensitive metering.

### SUMMARY OF THE INVENTION

A double nozzle for laser cutting head according to the present invention is defined in claim 1.

Further embodiments of the present invention are defined in the dependent claims.

One advantage of the invention is to provide a more uniform secondary fluid flow and/or an improved functional alignment with respect to standard designs (e.g., three-milled flats). Another advantage of the invention is to provide improved alignment of a double nozzle that is nearly equal to that of a single nozzle. Another advantage of the invention is to enable a more reliable, repeatable operation (e.g., whether attended or unattended; hand loaded or auto-loaded; and/or hand aligned or machine aligned). Another advantage of the invention is to minimize the chance for assembly errors and mixing of parts (e.g., particularly if outer and inner nozzles are pre-assembled and fastened within a cartridge). Another advantage of the invention is to provide a non-press fit relationship of the inner and the outer nozzle portions. Another advantage of the invention is increase the alignment along conical surfaces, which can also improve radial alignment. Another advantage of the invention is to enable centering of a nozzle into a chamfer or cone region without using a threaded configuration. Another advantage of the invention is to simplify the assembly process and need for an extensive interference and/or press fit to hold the inner and outer nozzles together.

In some embodiments, the region includes an interface between the exterior surface of the inner body portion and the interior surface of the outer body portion. In some embodiments, the coaxial fluid flow paths are shaped to increase fluid flow and uniformity of fluid flow through the double nozzle. In some embodiments, each of the fluid flow paths is defined at least partially by a corresponding feature in the exterior surface of the inner body portion. In some embodiments, each of the fluid flow paths is defined at least partially by a corresponding feature in the interior surface of the outer body portion. In some embodiments, each of the fluid flow paths includes a scalloped or curved surface. In some embodiments, the interface between the exterior surface of the inner body portion and the interior surface of the outer body portion is at least partially defined by one or more step features. In some embodiments, each of the features is configured to assist with seating and alignment of the inner body portion relative to the outer body portion during assembly of the double nozzle. In some embodiments, the substantial alignment is less than about 0.051 mm (0.002 inches).

### BRIEF DESCRIPTION OF THE DRAWINGS

The foregoing discussion will be understood more readily from the following detailed description of the invention when taken in conjunction with the accompanying drawings.
Figure 1 is a cross-sectional diagram of a prior art double nozzle for a laser cutting system.
Figure 2 is a cross-sectional diagram of an improved double nozzle for a laser cutting system, according to an illustrative embodiment of the invention.
Figure 3 is a three-dimensional half-sectional view of an improved double nozzle for a laser cutting system, according to an illustrative embodiment of the invention.
Figure 4 is a cross-sectional diagram of an improved double nozzle for a laser cutting system in which the inner body portion is conically seated within the outer body portion, according to an illustrative embodiment of the invention.
Figures 4A-4B show perspective views of double nozzles having more than three slots, according to illustrative embodiments of the invention.
Figure 5A shows a three-dimensional measured flow mapping of a standard three-slot design for a double nozzle.
Figure 5B shows a three-dimensional measured flow mapping of a six-groove design for a double nozzle, according to an illustrative embodiment of the invention.
Figure 6 shows a perspective view of an inner body portion of a double nozzle, according to an illustrative embodiment of the invention.
Figure 7 shows a cross-sectional view from the side of the nozzle of one possible step feature of a double nozzle, according to an illustrative embodiment of the invention.

### DETAILED DESCRIPTION OF THE DRAWINGS

Figure 2 is a cross-sectional diagram of an improved double nozzle 200 for a laser cutting system, according to an illustrative embodiment of the invention. The double nozzle 200 includes an inner body portion 202 having an interior surface 203 defining an inner nozzle bore 205 and an inner nozzle orifice 212. The inner body portion 202 has a first exterior circumferential surface 223 disposed toward a distal end 209 of the inner body portion 202. The inner body portion 202 has a second exterior circumferential surface 222 disposed toward a proximal end 221 of the inner body portion 202. The double nozzle 200 also includes an outer body portion 204 having an interior surface 225 defining an outer nozzle bore 211 and an outer nozzle orifice 214. The second exterior circumferential surface 222 is shaped to mate and align (e.g., directly) with the laser processing head (not shown). The outer body portion 204 is matingly engaged with the first exterior circumferential surface 223 of the inner body portion 202 and is isolated (e.g., substantially) from direct alignment contact with the laser processing head. The inner body portion 202 and the outer body portion 204 are aligned to define a coaxial fluid flow path 231 therethrough.

Generally, the double nozzle 200 has similar external and internal dimensions to the prior art double nozzle 100 shown and described above in Figure 1. However, the double nozzle 200 has fewer interface surfaces between the inner nozzle bore 212 of the inner body portion 202 and the longitudinal axis 207 of the laser beam. Specifically, the double nozzle 200 has one interface as a result of forming the second exterior circumferential surface 222 (the nozzle machining head interface surface) directly on the inner body portion 202. Thus, the reduction in interface surfaces can be due to a relocation of the interface 224 between the inner and outer body portions 202, 204, as compared with the interface 124 of the prior art. Such a re-configuration reduces the number of "direct alignment contact" surfaces, e.g., surfaces that control alignment of inner nozzle bore 212 relative to longitudinal axis 207 (even though, in some configurations, some physical contact may be present between the surfaces). In this case, the number of direct alignment contact surfaces is two (i.e., the nozzle machining head interface surface 222 and its complementary surface on the laser head) from the four surfaces shown in the prior art configuration of Figure 1. Thus, the double nozzle 200 provides a more direct connection between the longitudinal axis 207 and the inner nozzle bore 212, loosens manufacturing requirements on outer body portion 204, and reduces installation complexity and verification procedures. In this configuration, the laser beam and the gas flow can be insulated from direct effects of any assembly errors.

The inner and outer body portions 202, 204 are affixed by a variety of methods including friction welding or press fits. The nozzle machining head interface surface 222 of the double nozzle 200 includes a contoured surface shaped to complement a contoured alignment surface on the laser machining head. Thus, when a technician installs the double nozzle 200 in a laser machining head, the contoured surface of the double nozzle 200 mates with the contoured alignment surface of the laser machining head, facilitating alignment of the double nozzle 200 with the longitudinal axis 207. This alignment occurs because as the double nozzle 200 is installed in the laser machining head, the contoured mating surface contacts the first contoured alignment surface centering the double nozzle 200, thereby causing the longitudinal axis 207 of the double nozzle 200 to align with the torch axis and thus the laser beam. As a result, the double nozzle 200 becomes centered about the laser beam to provide a concentric uniform annular gas flow about the laser beam to facilitate torch operation. This radially-centered double nozzle 200 avoids the field replacement and alignment problems of the prior art, and/or reduces or eliminates the high precision manufacturing requirements of multiple parts.

The contoured surface is a linear taper. Tapered alignment surfaces promote even seating and alignment of the double nozzle 200 and the inner nozzle bore 212 relative to the longitudinal axis 207. The angle formed between the taper and the axis of the laser beam can be any value less than 90 degrees, preferably less than about 45 degrees and, more preferably, less than about 20 degrees. Such configurations help to pair contoured mating surfaces with contoured alignment surfaces to centrally dispose the double nozzle 200 along the longitudinal axis 207.

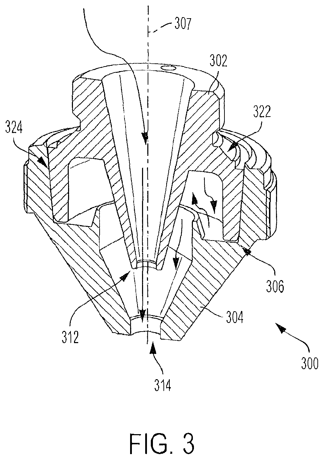

Figure 3 is a three-dimensional half-sectional view of an improved double nozzle 300 for a laser cutting system, according to an illustrative embodiment of the invention. The double nozzle 300 includes an inner body portion 302 having an inner nozzle bore 312 and an outer body portion 304 having an outer nozzle bore 314, both of which are oriented along a longitudinal axis 307 of the laser beam. The double nozzle 300 has a similar configuration to the double nozzle 200 shown and described above in Figure 2, with several notable differences. For example, in this configuration, the interface 324 between the inner body portion 302 and the outer body portion 304 is tapered in a "conical seating" arrangement with respect to the longitudinal axis 307. As shown, this "conical interference" interface 324 is a "conical interference interface," which can have a linear dimension of about 0.0254 to 0.0762 mm (0.001 to 0.003 inches). In some embodiments, the conical interference interface 324 can be pressed and crimped, e.g., to about 8896.44 N (2000 1bF). The inner body portion 302 also includes an exterior surface 322. The exterior surface 322 can include a conical datum feature that is aligned to the through bore. The outer body portion 304 can have an "axial stop" 306. The conical interference interface 324 and/or the axial stop 306 can help align the inner body portion 302 to the outer body portion 304 and the longitudinal axis 307.

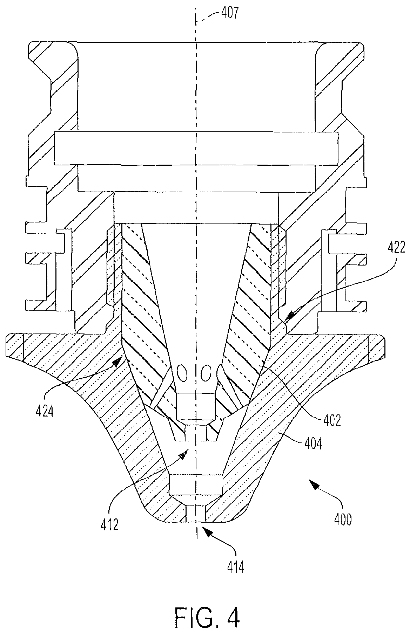

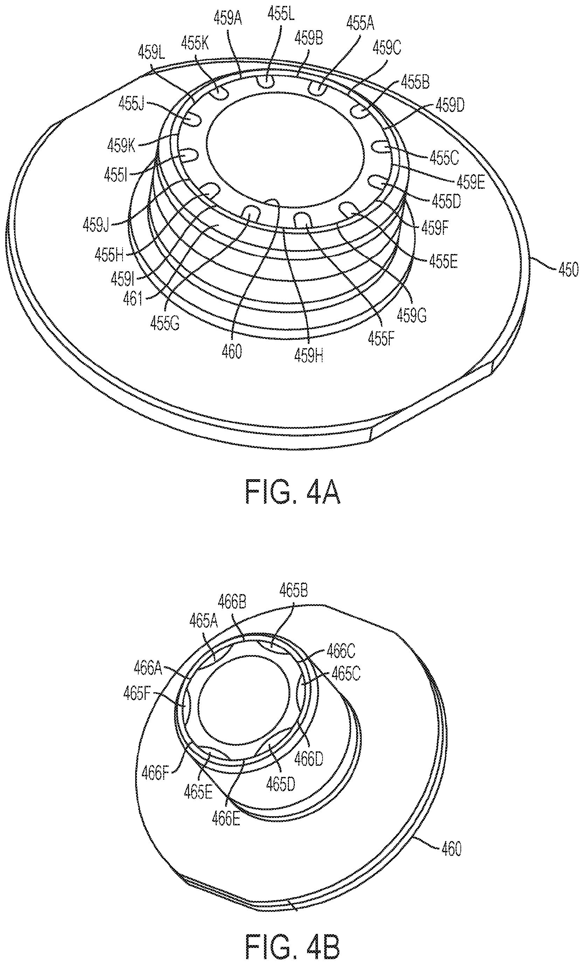

Figure 4 is a cross-sectional diagram of another improved double nozzle 400 for a laser cutting system, according to an illustrative embodiment of the invention. The double nozzle 400 includes an inner body portion 402 having an inner nozzle bore 412 and an outer body portion 404 having an outer nozzle bore 414, which are oriented along a longitudinal axis 407 of the laser beam. The double nozzle 400 has a similar configuration to the double nozzle 300 shown and described above in Figure 3 with respect to the "conical seating" arrangement, although the Figure 4 configuration does not employ the reduced number of interface surfaces shown in Figure 2. In the Figure 4 configuration, the inner body portion 402 is conically seated within the outer body portion 404. The conical seating itself improves alignment of inner nozzle bore 412 and outer nozzle bore 414 with respect to the longitudinal axis 407 (and hence the laser beam), independent of the benefits of the redesign shown in Figure 2.

Generally, coaxiality of the inner body portion and the outer body portion can be further improved by avoiding slip fits and press fits in favor of a clearance fit, with inner and outer body portions adjusted to a coaxial position via precise tooling and subsequently attached to each other (e.g., via screws, tabs, welds, glue bonds, solder joints or another method that results in the two parts being fixed in a highly positioned coaxial arrangement). In some embodiments, the inner and outer body portions can be made to have a low impedance, high conductivity bond (e.g., to allow for high frequency AC capacitive height sensing signals to pass between the inner body portion and the outer body portion). Such a configuration can be achieved through direct contact of fasteners, conductive elements within expox mix, soft solder, silver braze, or welding (e.g., laser welding, friction welding, or ebeam welding). Alternatively or in conjunction with the screwed and/or tapered surfaces for alignment discussed herein, nozzles can be formed pre-aligned and fixtured, and/or glued or otherwise welded, bonded, fastened and joined for industrial cutting applications and solutions.

Uniformity of the double nozzle flow is important to the consistency of the cut process. Currently, most double nozzles are characterized by an inner nozzle with a tri-lobe feature and three slots to meter and distribute the flow about the central process gas bore. However, these three slots can create a non-uniform flow within the double nozzle. In contrast, the invention uses more than three slots. For example, Figure 4A shows a double nozzle 450 having twelve slots 455A-L, and Figure 4B shows a double nozzle 460 having six slots 465A-465F. The configurations of the nozzles 450, 460 can improve alignment between nozzles 450 and 460 as well as enhance the process consistency and cut quality over traditional three-slot or three-bore configurations. In some embodiments, the distinct flow passages including the "slots" shown in Figures 4A-4B can take a variety of other forms, e.g., can be holes, grooves, channels, or other features configured to form distinct co-axial fluid flow paths through the double nozzle and/or to improve fluid flow and decrease non-uniformity of fluid flow (e.g., from the perspective of the laser beam). In the industry, the conventional wisdom has been to form flats or drill holes, rather than to use a form of "scalloped" slots or other features, because of the complexity that these features introduce (e.g., in construction of the parts), and in this respect the invention moves away from this conventional teaching. With the "slots" or corresponding features bored out of at least one of the inner or outer nozzle portions, corresponding features are naturally generated in the remaining terrain of the respective nozzle portion, e.g., ribs, struts, walls, or partitions (such as features 459A-L or features 466A-F).

As shown in Figure 4A, compared to conventional three slotted double nozzles there are more points or areas of contact in the interface region between the exterior surface of the inner nozzle 460 and the interior surface of the outer nozzle 461. This increased number of contact areas (e.g., points of contact and/or points of alignment influence) results in an improved alignment between inner nozzle 460 and outer nozzle 461. If the inner nozzle 460 includes twelve or six corresponding ribs for making contact, the effect of any one rib being out of alignment can be negligible, as there are still more than sufficient ribs to ensure proper alignment. However, using a design having only three ribs, if one rib is out of alignment, there are only two others to compensate, which can mean a larger total effect on alignment or misalignment for the whole configuration as each rib can have a greater impact, effect or influence on alignment under these circumstances. In addition, the total amount of contact surface area between the inner nozzle 460 and the outer nozzle 461 is reduced. Some past designs have included significant surface area contact between the inner and outer nozzles, which can provide higher-than-needed opportunities for misalignment (e.g., due to surface imperfections on the parts). In addition, it is not always obvious or practical to notice and/or correct such deficiencies in the field. In contrast to the conventional teachings, Figure 4B shows a reduced contact surface area between the ribs 466A-466F of the inner nozzle 460 and the outer nozzle 461, reducing the opportunities for misalignment. Using such configurations, an improvement of about 50% improvement in alignment has been observed: whereas prior art embodiments have seen discrepancies in alignment of about 0.0762 mm (0.003 inches) between an inner nozzle and an outer nozzle, configurations in accordance with the principles of Figure 4B can achieve discrepancies of about half that amount, e.g., about 0.0381 mm (0.0015 inches).

Further, as shown in Figure 4B, each of the features of the current invention has a comparatively smaller contact area and circumferential width than the comparable counterpart ribs on the conventional three slot design. This reduction in circumferential width results in a more uniform and consistent gas flow between the inner nozzle 460 and outer nozzle 461 as these interfaces between the inner nozzle 460 and the outer nozzle 461 have a reduced effect on gas flow interrupted by their presence and as such limit the size of downstream flow dead spots.

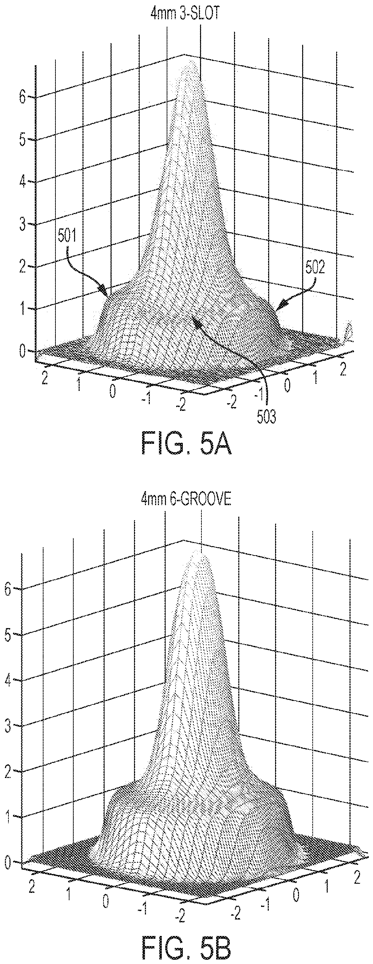

Figure 5A shows a three-dimensional measured flow mapping of a standard three-slot design for a double nozzle, while Figure 5B shows a three-dimensional measured flow mapping of a six-groove design for a double nozzle, according to an illustrative embodiment of the invention. The Figure 5B diagram shows improved (e.g., more even or radially symmetric) distribution, including with fewer interruptions in comparison to the Figure 5A. In particular, Figure 5A shows non-uniformity of the outer flow, and the bumps (e.g., bumps 501 and 502) and dips (e.g., dip 503), caused by corresponding slots, can be easily visualized. The bumps shown in Figure 5A are diametrically opposed to the slot location, and the dips fall in between the bumps, indicating that the slot flow "shoots" across and under the inner nozzle to exit the nozzle bore at a diametrically opposite location. In contrast, Figure 5B shows that in the six-groove design, the outer pressure shelf is more uniform (e.g., less impacted by the more numerous but comparatively smaller features). Thus, the flow characteristics within the double nozzle can be dramatically impacted by the shape and/or size of the features (e.g., slots, holes, or other features) defining the fluid passageways.

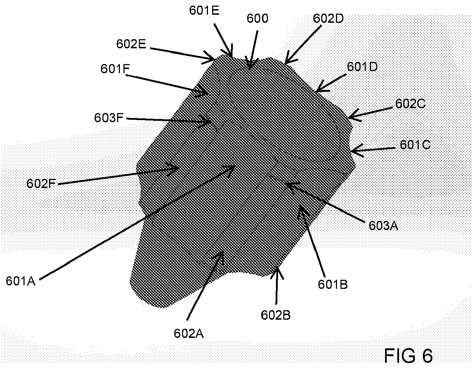

Figure 6 shows a perspective view of an inner body portion 600 of a double nozzle, according to an illustrative embodiment of the invention. As above, the inner body portion 600 defines six features (e.g., slots 601A-601F, which when mated with the outer body portion form six flow passages about the central bore) in between six corresponding "ribs" or features 602A-602F. In some embodiments, the features 601A-601F have a "scalloped" shape, or another shape with a defined curvature. In some embodiments, the features 602A-602F further include step features (e.g., 603A and 603F as depicted, with corresponding features for the remaining ribs not visible in this view) that assist with seating and alignment of the inner body portion 600 relative to the outer nozzle (not shown) during assembly. In some embodiments, the step features 603A-603F help to reduce the area over which an interference fit is needed, which can have benefits for assembly, such as reduced likelihood of pinching, rocking, or misalignment. In some embodiments, the slots can be formed in the outer nozzle, in addition to or alternatively to being formed in the inner body portion 600. In some embodiments step features 603A-603F may be located in the rearmost portion of inner body portion 600 (e.g., occupying about less than the back 20% of the inner body portion, in one embodiment occupying about less than the back 10% of the inner body portion). Features 601A-601F are raised radially outward slightly relative to the forward portions of features 602A-602F. Features 602A-602F are sized to contact an interior surface of outer nozzle 461 during assembly, the six features roughly aligning inner body portion 600 with outer nozzle 461 during the initial part of assembly. Then once inner body portion 600 is substantially inserted within outer nozzle 461 (e.g., greater than about 50% inserted or in some cases greater than about 80% inserted longitudinally) step features 603A-603F begin to contact an interior surface of outer nozzle 461 in an interference fit style fashion, further driving alignment between inner body portion 600 and outer nozzle 461 and securing inner body portion 600 within outer nozzle 461.

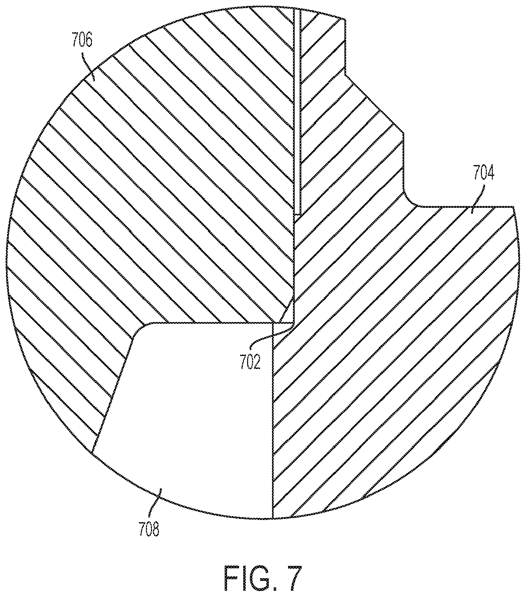

Figure 7 shows a cross-sectional view from the side of the nozzle of one possible step feature 702 of a double nozzle, according to an illustrative embodiment of the invention. In this view, an outer nozzle 704 and an inner nozzle 706 are shown interfacing at or near the step feature 702. The outer nozzle 704 includes an interior surface 708 (depicted without diagonal shading). In this embodiment, the step feature 702 can be formed in the outer nozzle 704 and perform the same or substantially the same function as described above.

While the invention has been particularly shown and described with reference to specific preferred embodiments, it should be understood by those skilled in the art that various changes in form and detail may be made therein without departing from the scope of the invention as defined by the following claims.

## Claims

1. A double nozzle (200, 300, 400, 450, 460) for a laser cutting head, the double nozzle comprising:
an inner body portion (202, 302, 402, 600, 460, 706) having (i) an interior surface (203) defining a first bore (205, 312, 412), , the bore aligned with a central longitudinal axis (207, 307, 407) of the body, and (ii) a first exterior circumferential surface (223) disposed toward a distal end (209) of the inner body portion (202, 302, 402, 600, 460, 706) and a second exterior circumferential surface (222) disposed toward a proximal end (221) of the inner body portion (202, 302, 402, 600, 460, 706), wherein the second circumferential exterior surface (222) is tapered relative to a longitudinal axis of the double nozzle; and
an outer body portion (204, 304, 404, 461, 704) having an interior surface (225) defining a second bore (221, 314, 414) that is substantially aligned to the longitudinal axis (207, 307, 407), the outer body portion (204, 304, 404, 461, 704) matingly engaged with a region of the first exterior circumferential surface (223, 322) of the inner body portion (202, 302, 402, 600, 460, 706),
wherein the inner body portion (202, 302, 402, 600, 460, 706) and the outer body portion (204, 304, 404, 461, 704) are affixed, and
wherein the region between the first exterior circumferential surface (223, 322) of the inner body portion (202, 302, 402, 600, 460, 706) and the interior surface (225) of the outer body portion (204, 304, 404, 461, 704) defines at least six coaxial fluid flow paths (455, 465, 601) through an interior annular flow volume of the double nozzle, each fluid flow path (455, 465, 601) defined at least in part by a corresponding feature formed in at least one of the inner body portion (202, 302, 402, 600, 460, 706) or the outer body portion (204, 304, 404, 461, 704).

2. The double nozzle of claim 1 wherein the region includes an interface (224, 324) between the exterior surface (223, 322) of the inner body portion (202, 302, 402, 600, 460, 706) and the interior surface (225) of the outer body portion (204, 304, 404, 461, 704).

3. The double nozzle of claim 1 wherein the coaxial fluid flow paths (455, 465, 601) are shaped to increase fluid flow and uniformity of fluid flow through the double nozzle.

4. The double nozzle of claim 1 wherein each of the fluid flow paths (455, 465, 601) is defined at least partially by a corresponding feature in the exterior surface (223, 322) of the inner body portion (202, 302, 402, 600, 460, 706).

5. The double nozzle of claim 1 wherein each of the fluid flow paths(455, 465, 601) is defined at least partially by a corresponding feature in the interior surface (225) of the outer body portion (204, 304, 404, 461, 704).

6. The double nozzle of claim 1 wherein each of the fluid flow paths (455, 465, 601) includes a scalloped or curved surface.

7. The double nozzle of claim 2 wherein the interface between the exterior surface (223, 322) of the inner body portion (202, 302, 402, 600, 460, 706) and the interior surface (225) of the outer body portion (204, 304, 404, 461, 704) is at least partially defined by one or more step features (603).

8. The double nozzle of claim 1 wherein each of the features is configured to assist with seating and alignment of the inner body portion (202, 302, 402, 600, 460, 706) relative to the outer body portion (204, 304, 404, 461, 704) during assembly of the double nozzle.

9. The double nozzle of claim 1 wherein the substantial alignment is less than about 0.0508 mm (0.002 inches).

## Patentansprüche

1. Doppeldüse (200, 300, 400, 450, 460) für einen Laserschneidkopf, wobei die Doppeldüse Folgendes umfasst:
einen inneren Körperabschnitt (202, 302, 402, 600, 460, 706) mit (i) einer Innenfläche (203), die eine erste Bohrung (205, 312, 412) definiert, wobei die Bohrung mit einer mittigen Längsachse (207, 307, 407) des Körpers ausgerichtet ist, und (ii) einer ersten äußeren Umfangsfläche (223), die zu einem distalen Ende (209) des inneren Körperabschnitts (202, 302, 402, 600, 460, 706) hin angeordnet ist, und einer zweiten äußeren Umfangsfläche (222), die zu einem proximalen Ende (221) des inneren Körperabschnitts (202, 302, 402, 600, 460, 706) hin angeordnet ist, wobei die zweite äußere Umfangsfläche (222) in Bezug zu einer Längsachse der Doppeldüse verjüngt ist; und
einen äußeren Körperabschnitt (204, 304, 404, 461, 704) mit einer Innenfläche (225), die eine zweite Bohrung (221, 314, 414) definiert, die im Wesentlichen mit der Längsachse (207, 307, 407) ausgerichtet ist, wobei der äußere Körperabschnitt (204, 304, 404, 461, 704) in einen Bereich der ersten äußeren Umfangsfläche (223, 322) des inneren Körperabschnitts (202, 302, 402, 600, 460, 706) passend eingreift,
wobei der innere Körperabschnitt (202, 302, 402, 600, 460, 706) und der äußere Körperabschnitt (204, 304, 404, 461, 704) fixiert sind und
wobei der Bereich zwischen der ersten äußeren Umfangsfläche (223, 322) des inneren Körperabschnitts (202, 302, 402, 600, 460, 706) und der Innenfläche (225) des äußeren Körperabschnitts (204, 304, 404, 461, 704) mindestens sechs koaxiale Fluidströmungswege (455, 465, 601) durch einen inneren, ringförmigen Strömungsraum der Doppeldüse definiert, wobei jeder Fluidströmungsweg (455, 465, 601) zumindest teilweise durch ein zugehöriges Merkmal definiert ist, das in dem inneren Körperabschnitt (202, 302, 402, 600, 460, 706) und/oder dem äußeren Körperabschnitt (204, 304, 404, 461, 704) ausgebildet ist.

2. Doppeldüse nach Anspruch 1, wobei der Bereich eine Schnittstelle (224, 324) zwischen der Außenfläche (223, 322) des inneren Körperabschnitts (202, 302, 402, 600, 460, 706) und der Innenfläche (225) des äußeren Körperabschnitts (204, 304, 404, 461, 704) umfasst.

3. Doppeldüse nach Anspruch 1, wobei die koaxialen Fluidströmungswege (455, 465, 601) geformt sind, um die Fluidströmung und die Gleichförmigkeit der Fluidströmung durch die Doppeldüse zu erhöhen.

4. Doppeldüse nach Anspruch 1, wobei jeder der Fluidströmungswege (455, 465, 601) zumindest teilweise durch ein zugehöriges Merkmal in der Außenfläche (223, 322) des inneren Körperabschnitts (202, 302, 402, 600, 460, 706) definiert ist.

5. Doppeldüse nach Anspruch 1, wobei jeder der Fluidströmungswege (455, 465, 601) zumindest teilweise durch ein zugehöriges Merkmal in der Innenfläche (225) des äußeren Körperabschnitts (204, 304, 404, 461, 704) definiert ist.

6. Doppeldüse nach Anspruch 1, wobei jeder der Fluidströmungswege (455, 465, 601) eine gewellte oder gekrümmte Fläche umfasst.

7. Doppeldüse nach Anspruch 2, wobei die Schnittstelle zwischen der Außenfläche (223, 322) des inneren Körperabschnitts (202, 302, 402, 600, 460, 706) und der Innenfläche (225) des äußeren Körperabschnitts (204, 304, 404, 461, 704) zumindest teilweise durch ein oder mehrere Stufenmerkmale (603) definiert ist.

8. Doppeldüse nach Anspruch 1, wobei jedes der Merkmale dazu ausgelegt ist, zum Einsetzen und Ausrichten des inneren Körperabschnitts (202, 302, 402, 600, 460, 706) in Bezug zum äußeren Körperabschnitt (204, 304, 404, 461, 704) während der Montage der Doppeldüse beizutragen.

9. Doppeldüse nach Anspruch 1, wobei die wesentliche Ausrichtung weniger als etwa 0,0508 mm (0,002 Zoll) beträgt.

## Revendications

1. Buse double (200, 300, 400, 450, 460) pour tête de coupage laser, la buse double comprenant :
une partie corps interne (202, 302, 402, 600, 460, 706) ayant (i) une surface intérieure (203) définissant un premier alésage (205, 312, 412), l'alésage étant aligné avec un axe longitudinal central (207, 307, 407) du corps, et (ii) une première surface circonférentielle extérieure (223) située vers une extrémité distale (209) de la partie corps interne (202, 302, 402, 600, 460, 706) et une seconde surface circonférentielle extérieure (222) située vers une extrémité proximale (221) de la partie corps interne (202, 302, 402, 600, 460, 706), la seconde surface circonférentielle extérieure (222) étant effilée par rapport à un axe longitudinal de la buse double ; et
une partie corps externe (204, 304, 404, 461, 704) ayant une surface intérieure (225) définissant un second alésage (221, 314, 414) qui est sensiblement aligné sur l'axe longitudinal (207, 307, 407), la partie corps externe (204, 304, 404, 461, 704) venant en prise par accouplement avec une région de la première surface circonférentielle extérieure (223, 322) de la partie corps interne (202, 302, 402, 600, 460, 706),
la partie corps interne (202, 302, 402, 600, 460, 706) et la partie corps externe (204, 304, 404, 461, 704) étant fixées, et
la région entre la première surface circonférentielle extérieure (223, 322) de la partie corps interne (202, 302, 402, 600, 460, 706) et la surface intérieure (225) de la partie corps externe (204, 304, 404, 461, 704) définissant au moins six trajets d'écoulement de fluide coaxiaux (455, 465, 601) à travers un volume d'écoulement annulaire intérieur de la buse double, chaque trajet d'écoulement de fluide (455, 465, 601) étant défini au moins en partie par une caractéristique correspondante formée dans au moins l'une de la partie corps interne (202, 302, 402, 600, 460, 706) ou de la partie corps externe (204, 304, 404, 461, 704).

2. Buse double selon la revendication 1, la région comprenant une interface (224, 324) entre la surface extérieure (223, 322) de la partie corps interne (202, 302, 402, 600, 460, 706) et la surface intérieure (225) de la partie corps externe (204, 304, 404, 461, 704).

3. Buse double selon la revendication 1, les trajets d'écoulement de fluide coaxiaux (455, 465, 601) étant formés pour augmenter l'écoulement de fluide et l'uniformité de l'écoulement de fluide à travers la buse double.

4. Buse double selon la revendication 1, chacun des trajets d'écoulement de fluide (455, 465, 601) étant défini au moins partiellement par une caractéristique correspondante dans la surface extérieure (223, 322) de la partie corps interne (202, 302, 402, 600, 460, 706).

5. Buse double selon la revendication 1, chacun des trajets d'écoulement de fluide (455, 465, 601) étant défini au moins partiellement par une caractéristique correspondante dans la surface intérieure (225) de la partie corps externe (204, 304, 404, 461, 704).

6. Buse double selon la revendication 1, chacun des trajets d'écoulement de fluide (455, 465, 601) comprenant une surface festonnée ou incurvée.

7. Buse double selon la revendication 2, l'interface entre la surface extérieure (223, 322) de la partie corps interne (202, 302, 402, 600, 460, 706) et la surface intérieure (225) de la partie corps externe (204, 304, 404, 461, 704) étant au moins partiellement définie par une ou plusieurs caractéristiques étagées (603).

8. Buse double selon la revendication 1, chacune des caractéristiques étant conçue pour aider au positionnement et à l'alignement de la partie corps interne (202, 302, 402, 600, 460, 706) par rapport à la partie corps externe (204, 304, 404, 461, 704) au cours de l'assemblage de la buse double.

9. Buse double selon la revendication 1, l'alignement sensible étant inférieur à environ 0,0508 mm (0,002 pouce) .
